# EUROPEAN PATENT SPECIFICATION

(11) **EP 4 378 127 B1**
(45) Date of publication and mention of the grant of the patent: **22.07.2026**
(21) Application number: 21773588.5
(22) Date of filing: 09.09.2021
(51) Int. Cl.: H04L 12/28, H04L 12/40, H04L 45/00, H04L 45/24, H04L 47/125

(54) **APPARATUSES, METHODS AND COMPUTER PROGRAMS FOR PROVIDING ADDITIONAL INTERNET ACCESS, VEHICLE AND HOME NETWORK NODE**
VORRICHTUNGEN, VERFAHREN UND COMPUTERPROGRAMME ZUR BEREITSTELLUNG VON ZUSÄTZLICHEM INTERNETZUGANG, FAHRZEUG UND HEIMNETZWERKKNOTEN
APPAREILS, PROCÉDÉS ET PROGRAMMES INFORMATIQUES POUR FOURNIR UN ACCÈS INTERNET SUPPLÉMENTAIRE, VÉHICULE ET NOEUD DE RÉSEAU DOMESTIQUE

(43) Date of publication of application: 05.06.2024
(73) Proprietor: CARIAD SE, 38440 Wolfsburg (DE)
(72) Inventor: DEHARDE, Marc, 44137 Dortmund (DE); KAMPERMANN, Jens, 42781 Haan (DE); PRIEBE, Matthias, 44137 Dortmund (DE); REJU, Jithin, 44145 Dortmund (DE); SFIRNACIUC, Constantin, 44623 Herne (DE)
(74) Representative: Hofstetter, Schurack & Partner
(86) International application number: PCT/EP2021/074775
(87) International publication number: WO 2023/036413

(56) References cited:
- CN-A- 110 855 728
- US-A1- 2016 174 106
- US-A1- 2020 336 411

## Description

The present invention relates to a vehicle, a home network node, controllers, apparatuses, methods, and computer programs for providing additional internet access for a home network and for managing a connection between one or more user devices and the internet, more particularly but not exclusively, to a concept for using additional internet access via a vehicle to enhance services and user experience in a home network.

Home networks become more and more accepted and appreciated. With the internet of things (IoT) many components or devices become smart, meaning they are enabled to communicate and participate in communication networks, such as home and company networks. A home network may be a secured network, which is administrated by an owner of a household and which may be used by the members, devices and smart components of the household. Smart components or devices added to households may comprise components dedicated/tailored to home network applications, e.g. media server, NAS (network attached storage), smart TV, surveillance equipment, light equipment, radiator thermostats, etc. The demand for home network features and resources is growing, e.g. loT applications are on the rise. These devices and the services they provide mostly rely on internet connections, such as provided by cable boxes or modems at home. A quality of the services provided depends, for example, on the bandwidth and latency provided by the home network access point.

Document US 9,674,759 B2 describes a system including a vehicle-based mobile femto-cell access point operating within a wireless cellular network in communication with a home-based femto-cell access point and a home appliance network controller. This system provides an autonomous control of "smart-home" functionality by utilizing handovers and a set of dedicated in-band messages.

Document US 10,917,359 B2 discloses a vehicular communication device and method for communicating with a remote server. In various embodiments, the vehicular communication device receives a plurality of device packets from a vehicle device via a vehicular communication network, including device packets having a first priority and device packets having a second priority. Processing circuitry of the vehicular communication device determines the respective priorities of the received device packets based upon the contents of the packets, and queues at least some of the received device packets (and/or informational packets derived therefrom) in accordance with the respective priorities. The queued packets are output to a remote server for processing. The vehicular communication device receives responsive content from the remote server, which may include safety content, a servicing notice and/or targeted commercial content.

Document CN107786393A relates to a method and system for controlling smart home devices via the internet of vehicles and a smart phone, and belongs to the field of the internet of vehicles. The method comprises the following steps: registering and binding a vehicle data communication gateway and controlled devices on a cloud platform; setting a "home mode" navigation destination and advanced starting times T1, T2, T3 of the controlled devices via an APP of the smart phone; selecting a "home mode" via the APP; setting, by the cloud platform, the destination; automatically planning the path; estimating the remaining time T of arriving at the destination; judging whether the remaining time T of arriving at the destination of the vehicle is smaller than or equal to the advanced starting timesT1, T2, T3 of the controlled devices preset by a user; sending, by the cloud platform, a control instruction to a corresponding smart home gateway; and sending, by the smart home gateway, the control instruction to the corresponding controlled devices. The method and system for controlling the smart home devices via the internet of vehicles are convenient to operate, are able to achieve two-way communication and are high in accuracy.

US 2020/0336411 A1 discloses a method for managing the connection to other devices of a network device such as a residential gateway. The method prevents the other devices from being offered the ability to perform aggregation via the device which implements the method if this device itself performs link aggregation with other devices in order to increase its bandwidth. One thus avoids stream crossovers which reduce to naught the benefit of performing link aggregation between several residential gateways.

US 2016/0174106 discloses a peer to peer vehicle ad hoc network with a distributed P2P model for means of a decentralized model to house data/applications and bonding technologies to reduce collisions, which is extremely high for the accepted VANET standard of 802.11p. The inventive technology provides virtualization of various heterogeneous networks into a single abstract layer of data network, fast soft and hard handoff among various data networks with different link layer characteristics within half RTT plus hardware switching time, a complete load balance of data traffics within and among data networks, optimization of data network resource such as available bandwidths (optimal distributions available resources among the users of networks) with the ability of multi-path unicast for each Internet session, utilization of shortest path algorithm for the adhoc access network routing.

With the increasing number of smart devices, bandwidth of home network access points may become scarce. For example, with the introduction of video streaming services to a neighborhood, data demand at certain peak hours may exceed network capacities and service degradation may result.

There is a demand for an improved concept for providing internet access to a home network. The demand is addressed according to the appended independent claims.

Embodiments are based on the finding that a vehicle can be integrated into a home network and it may provide additional internet access. Such additional capacity can be used to enhance service quality and user experience.

Embodiments provide an apparatus for managing a connection between one or more user devices and the internet. The apparatus comprises one or more interfaces to couple to a home network and to couple to a vehicle. The apparatus further comprises a control module being configured to control the one or more interfaces. The control module is further configured to access the internet via the home network and via the vehicle and to control internet traffic between the one or more user devices and the internet. The control module is further configured to route the traffic of the one or more user devices to the internet. Furthermore, the one or more interfaces are configured to couple to the home network using a wired connection Therewith, a second access technology or path for the internet can be made available to a home network.

For example, the control module may be configured to balance a load between the traffic routed via the home network and traffic routed via the vehicle. Therewith, peak data rates can be shared between the at least two access links and service degradation can be reduced.

In further embodiments the control module may be configured to provide enhanced quality of service to the user devices using additional, parallel or alternative traffic routing via the home network and via the vehicle. In embodiments the second access may be used to provide higher quality of service using different routing policies.

The control module may be configured to provide enhanced data rates, higher communication reliability, and/or lower latency using traffic routing via the home network and via the vehicle.

Depending on the service demand routing can be adapted, e.g. tailored to a desired quality of service in a service portfolio.

Embodiments also provide an apparatus for a vehicle. The apparatus is configured to provide additional internet access for a home network. The apparatus comprises one or more interfaces to connect to the home network and to connect to the internet. The apparatus further comprises a control module, which is configured to control the one or more interfaces and to provide additional internet access for the home network via the vehicle. Furthermore, the one or more interfaces are configured to couple to the home network using a wired connection. Embodiments may enable additional internet access via a vehicle.

For example, the one or more interfaces comprise a cellular modem to couple to the internet. The control module may be configured to provide the additional internet access via a cellular communication network. Cellular access may be an independent alternative from regular home network access.

The one or more interfaces may comprise a modem for inter-vehicular communication. The control module may be configured to provide the additional internet access via inter-vehicular communication. Inter-vehicular internet access may be another independent access alternative. In some embodiments the apparatus for the vehicle may comprise an embodiment of the above apparatus for managing the connection. Therewith, a vehicle may also serve as connection controller or manager.

The one or more interfaces are configured to couple to the home network using a wired connection. A wired connection may be more robust and provide better quality of service.

For example, the one or more interfaces may be configured to charge the vehicle using the wired connection. In some embodiments charging and connecting to the home network may be carried out using the same plug or even wire.

A further embodiment is a controller for a home network or for a vehicle comprising one of the apparatuses described herein. A vehicle or home network node with such an apparatus is another embodiment.

A method for managing a connection between one or more user devices and the internet is another embodiment. The method comprises accessing the internet via the home network and via the vehicle. The method further comprises controlling traffic load between the one or more user devices and the internet, and routing the traffic of the one or more user devices to the internet. Therefore, the step of accessing the internet is realized with one or more interfaces to connect to the home network and to connect to the vehicle, wherein the one or more interfaces are configured to couple to the home network using a wired connection.

Yet another embodiment is a method for a vehicle and for providing additional internet access for a home network. The method comprises connecting to the home network and to the internet, and providing additional internet access for the home network via the vehicle. Therefore, the step of providing additional internet access is realized with one or more interfaces to connect to the home network and to connect to the vehicle, wherein the one or more interfaces are configured to couple to the home network using a wired connection.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Some other features or aspects will be described using the following non-limiting embodiments of apparatuses or methods or computer programs or computer program products by way of example only, and with reference to the accompanying figures, in which:
Fig. 1 illustrates block diagrams of an embodiment of an apparatus for managing a connection, an embodiment of an apparatus for a vehicle, an embodiment of a vehicle or vehicle controller, and an embodiment of a controller for a home network or a home network node;
Fig. 2 shows a block diagram of an embodiment of a method for managing a connection between one or more user devices and the internet;
Fig. 3 illustrates a block diagram of an embodiment of a method for a vehicle and for providing additional internet access for a home network;
Fig. 4 shows a communication scenario in an embodiment; and
Fig. 5 illustrates a flow chart of a method for managing a connection in an embodiment.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

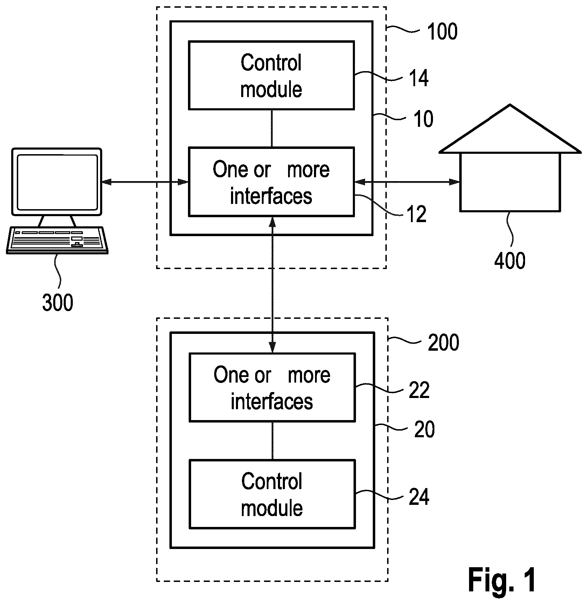

Fig. 1 illustrates block diagrams of an embodiment of an apparatus 10 for managing a connection, an embodiment of an apparatus 20 for a vehicle, an embodiment of a vehicle controller or vehicle 200, and an embodiment of a controller for a home network or home network node 100.

The apparatus 10 is configured to manage a connection between one or more user devices 300 and the internet. The one or more user devices are represented in Fig. 1 by a personal computer, however, the one or more user devices 300 may comprise any device connected to a home network 400, e.g. smart components such as computers, laptops, phones, televisions, meters, lights, etc. The apparatus 10 comprises one or more interfaces 12 to connect to the home network 400 and to connect to a vehicle or vehicle controller 200. The apparatus 10 further comprises a control module 14, which is coupled to the one or more interfaces 12. The control module 14 is configured to control the one or more interfaces 12 and to access the internet via the home network 400 and via the vehicle 200 or vehicle apparatus 20. The control module 14 is further configured to control internet traffic between the one or more user devices 300 and the internet and route the traffic of the one or more user devices 300 to the internet. In embodiments the apparatus 10 may be integrated into a vehicle or vehicle controller 200 and/or into a controller for a home network 400, home network node, respectively.

For example, the home network may have internet access through a digital subscriber line (DSL) modem or a cable modem. Such an access may be well defined in terms of a provided data rate (upload and download rates) and latency. The vehicle 200 may also provide internet access, e.g. through cellular network or a vehicular network as will be laid out in greater detail subsequently. The apparatus 10 may then manage the data traffic between at least these two access variants. In embodiments there could be more than two access options, e.g. the vehicle connects to another vehicle, which connect to another home network having a further access option, and so on.

Fig. 1 also illustrates an embodiment of an apparatus 20 for a vehicle or for a vehicle controller 200, a vehicle 200 respectively. The apparatus 20 is configured to provide additional internet access for the home network 400. The apparatus 20 comprises one or more interfaces 22 to connect to the home network 400 and to connect to the internet. The apparatus 20 further comprises a control module 24, which is coupled to the one or more interfaces 22. The control module 24 is configured to control the one or more interfaces 22 and to provide additional internet access for the home network 400 via the vehicle or vehicle controller 200. Another embodiment is a vehicle comprising the vehicle controller 200.

In embodiments the one or more interfaces 12, 22 may correspond to any means for obtaining, receiving, transmitting or providing analog or digital signals or information, e.g. any connector, contact, pin, register, input port, output port, conductor, lane, etc. which allows providing or obtaining a signal or information. An interface 12, 22 is wireline and it may be configured to communicate, i.e. transmit or receive signals, information with further internal or external components. The one or more interfaces 12, 22 may comprise further components to enable according communication in the (mobile) communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 12, 22 may be coupled to one or more antennas, which may correspond to any transmit and/or receive antennas, such as horn antennas, dipole antennas, patch antennas, sector antennas etc. In some examples the one or more interfaces 12, 22 may serve the purpose of transmitting or receiving or both, transmitting and receiving, information, such as input data, control information, further information messages, etc.

As shown in Fig. 1 the respective one or more interfaces 12, 22 are coupled to the respective control modules 14, 24 at the apparatuses 10, 20. In embodiments the control modules 14, 24 may be implemented using one or more processing units, one or more processing devices, any means for processing, such as a processor, a computer or a programmable hardware component being operable with accordingly adapted software. In other words, the described functions of the control modules 14, 24 may as well be implemented in software, which is then executed on one or more programmable hardware components. Such hardware components may comprise a general-purpose processor, a Digital Signal Processor (DSP), a microcontroller, etc.

In embodiments the vehicle may comprise an embodiment of a vehicle controller 200 and the apparatus 20. It may be any vehicle, e.g. a car, a truck, a van, a bus, a motor bike and it may comprise an electric or a combustion engine. The components of a vehicle may comprise sensors, e.g. cameras, temperature sensors, rain sensors, etc., processors, e.g. processors of any control unit, graphical processors, signal processors, etc., memory, e.g. data storage for media, user setting and information, status information etc., communication devices, e.g. modems, receivers, transmitters, and so on. The home network may be a network that is set up or operated at home. A typical scenario would be a wired or wireless local area network (LAN) that is setup in a household. For example, such a network may comprise an access point, e.g. a cable modem or digital subscriber line (DSL) modem, and further network components such as smart devices, smart phone, computers, tablet, laptop, television (TV), storage devices (network attached storage, NAS), gaming equipment, entertainment equipment, smart home equipment, lights, bulbs, thermostats, meters, sensors, etc.

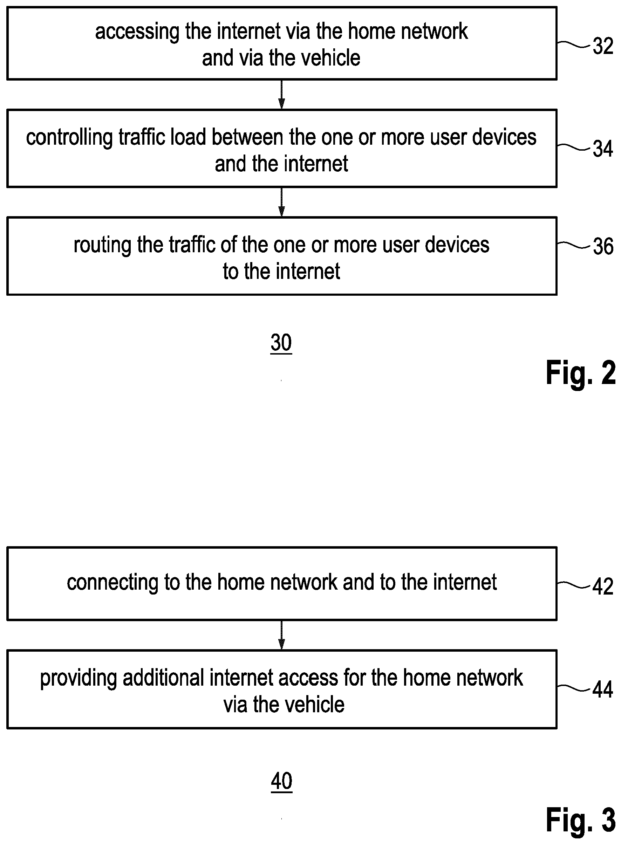

Fig. 2 shows a block diagram of an embodiment of a method 30 for managing a connection between one or more user devices 300 and the internet. The method 30 comprises accessing 32 the internet via the home network 300 and via the vehicle. The method 30 further comprises controlling 34 traffic load between the one or more user devices 300 and the internet and routing 36 the traffic of the one or more user devices 300 to the internet.

Fig. 3 illustrates a block diagram of an embodiment of a method 40 for a vehicle and for providing additional internet access for a home network 400. The method 40 comprises connecting 42 to the home network 400 and to the internet and providing 44 additional internet access for the home network 400 via the vehicle.

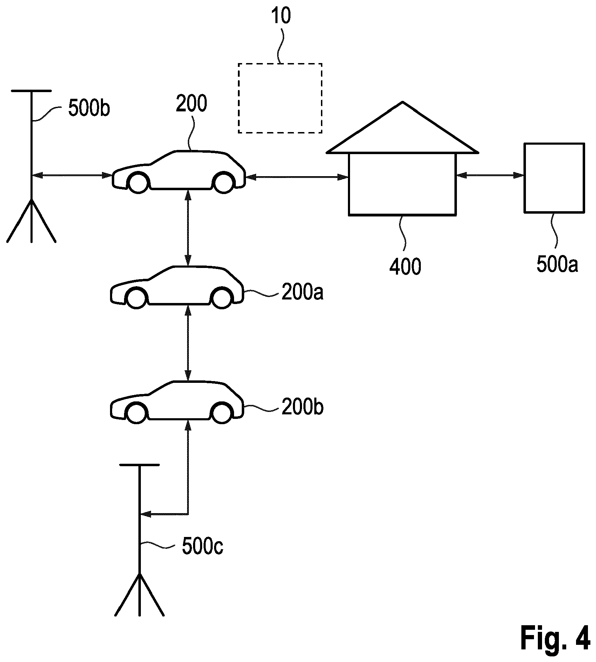

Fig. 4 shows a communication scenario in an embodiment. Fig. 4 illustrates a home network 400, which has an internet access point 500a (e.g. via cable or DSL). Moreover, the home network 400 is coupled to a vehicle controller or vehicle 200. The vehicle in turn has internet access via access point 500b, which could be a base station of a mobile communication system or an access point of another neighbor. As further shown in Fig. 4 the vehicle 200 could also be in communication with other vehicles 200a, 200b, which can provide another path to internet access 500c, which could be another base station or another neighbor, etc. An embodiment of the apparatus 10 manages the traffic of the occurring from the devices in the home network 400. More specifically the apparatus 10 decides to which access point 500a, 500b, 500c the traffic is routed.

The home network 400 does not have to rely on its single access point 500a and technology, mostly DSL or cable (DOCSIS, Data Over Cable Service Interface Specification). If there is a failure the home network is not separated from the internet, because there is at least one alternative access option. Internet access from the perspective of the home network becomes more stable. For example, a car can be used as alternative access point.

In embodiments the apparatus 10 may be integrated into a vehicle 200 or into the home network 400, or even both. For example, the control module 14 is configured to balance a load between the traffic routed via the home network 400 and traffic routed via the vehicle 200. Therewith, higher traffic capacity can be achieved. Furthermore, the control module 14 may be configured to provide enhanced quality of service to the user devices using additional, parallel or alternative traffic routing via the home network 400 and via the vehicle 200. Upon failure of one access technology, the other technology may compensate. Using both in parallel may enhance service robustness. For example, the control module 14 may be configured to provide enhanced data rate, communication reliability, and/or lower latency using traffic routing via the home network 400 and via the vehicle 200.

The apparatus 20 for the vehicle or vehicle controller 200 may provide one or more additional internet access options. For example, the one or more interfaces 22 may comprise a cellular modem to couple to the internet. The control module 14 is then configured to provide the additional internet access via a cellular communication network, which is exemplified in Fig. 4 by access point 500b. The one or more interfaces 22 may comprise a modem for inter-vehicular communication, e.g. with vehicles 200a and 200b in Fig. 4. The control module 24 is then configured to provide the additional internet access via inter-vehicular communication, exemplified by access point 500c in Fig. 4. As already outlined above the apparatus 10 may be comprised in vehicle 200.

The one or more interfaces 22 are configured to couple to the home network using a wired connection, e.g. in terms of wired local area network connection. Moreover, the one or more interfaces 22 may be configured to charge the vehicle using the wired connection. Hence, a wired connection may be used for charging and for communicating in embodiments. As outlined above, a controller for the home network 400 or for the vehicle 200 or both may comprise an embodiment of the apparatus 10.

As further shown in Fig. 4 the vehicle 200 may connect to other vehicles, e.g. by means of a cellular communication via modem, e.g. using car-to-car or vehicle-to-vehicle communication. That way, access to a fleet network may also be established. The vehicles 200, 200a, 200b may form an ad-hoc or multi-hop network to relay traffic. Such a mechanism may be useful particularly when radio communications at higher frequency, e.g. mmWave technology is used, which basically requires line of site radio channels. Such channels may be available for the vehicle parked outside but not for a user device inside a building. The radio protocols on the respective radio access technologies may hence be adapted to allow such tunneling or forwarding. Embodiments may be compliant to or even comprised in certain standard specifications, such as those specified by the 3GPP. Configuration information may for example be communicated using signaling radio bearers, e.g. by means of Radio Resource Control (RRC) messages, which are, for example, specified in the *.331 series of 3GPP (3^{rd} generation Partnership Project) as layer 3 control plane messages. For example, physical layer specification, e.g. by means of fast tunneling of the traffic, and other physical layer specifications may also be affected by present embodiments, e.g. *.201, *.211, *.212, *.213, *.214, *.216 series in the 3GPP specifications.

The communication link to the home network 400 may be via a plugin/charging cable Communication traffic may be multiplexed onto a charging connection or signal. In embodiments variants of access to internet may be through a network of cars/vehicles and other service providers (e.g. to a neighbor with different access technology or provider). Additionally or alternatively the internet access may be through wireless access technology (use car as 4G/5G modem (4^{th}, 5^{th} Generation)).

Embodiments may enhance the internet access performance (increase data rates (uplink/downlink), decrease latency, improve robustness, and/or extend to fleet backend services only available through the car or vehicle. For example, the vehicle may serve as proxy for certain services and the vehicle may be authorized for certain service, e.g. fleet services or services booked for the vehicle. The vehicle may then be used for authorized access to these services.

For example, in case of failure, the wired home network 400 may be replaced with mobile access provided by car. The home network may be extended via an operator or manufacturer backend. As outlined above, a connection to a network of vehicles may enable access to the internet, or vice versa, namely access to the home network via the internet.

In embodiments the apparatus 10, the control module 14 therein, respectively, may decide over which access point the traffic is routed in case of parallel access. There could be multiple , e.g. 10, neighbors providing access, such that the apparatus 10 establishes routing and load balancing. E.g., the control module 14 may be configured to detect a lowest latency for real time traffic and route real time traffic this way. Moreover, in some embodiments diversity gain could be achieved through both/multiple links: Data may be sent through both/multiple links to become super robust, secure, and/or safe.

For example, a backend of a manufacturer of the vehicle may offer a connection to the internet for the car owner/user. The connection via car/vehicle can be used either as a replacement of the home network connection (in case of outages) or as an extension to an existing home network connection to enhance the network performance. For example, key performance indicators (KPIs) could be throughput, latency, security, cost, etc. Load balancing and connection management can be handled by a connection manager/apparatus 10. The connection manger checks the availability of network connections and is aware of the respective quality of service (QoS) of each connection. The connection manager could either be part of the home router, a software on a home personal computer or in the vehicle's onboard control unit/controller.

The connection manager may be configurable by the user (car/home owner) or by a service provider (home network provider or connected car provider). The parameters for how and where to connect (either via home network, car connection or both) may be configurable based on a set of KPIs, which may include one or more elements of the group of a geographical position, available networks, link quality, available services, data rate, load, coverage, temporal availability, reliability, latency, waiting time, energy consumption, cost, etc.

The connection manager may be also be configured to enhance the network connection by using the car network as a parallel connection to the internet and thereby increasing the available bandwidth. Load balancing between the available connections is also handled by the connection manager based on either user preferences or configurations made available (downloadable) by the service provider(s). In some embodiments machine learning or artificial intelligence may be used to improve the load balancing or service allocation to the access variants. The connection manager is responsible for routing the traffic according to its configuration and the Qos of the available services to enhance the user experience, e.g. in terms of throughput, latency, security, cost, etc.

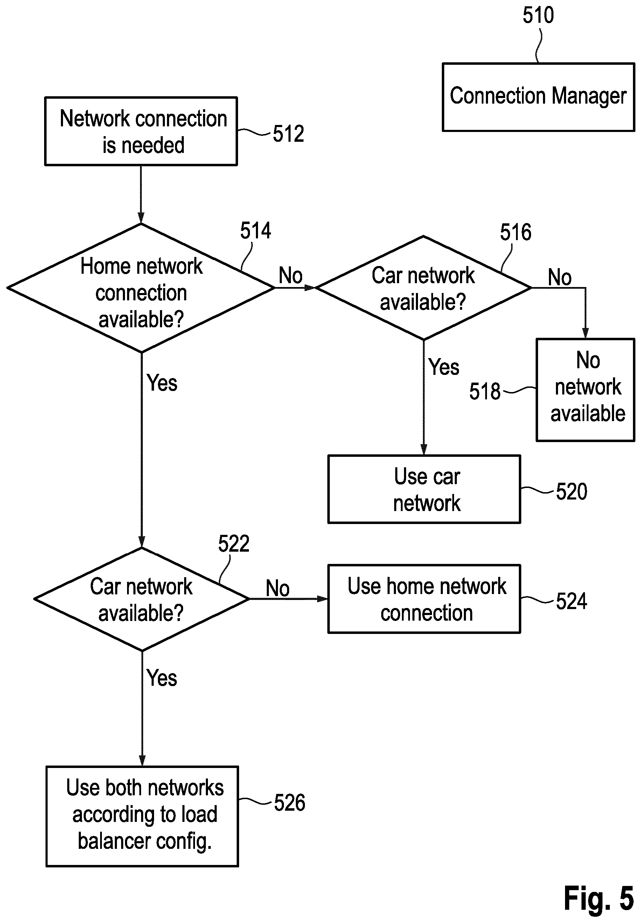

Fig. 5 illustrates a flow chart of a method for managing a connection in an embodiment. The steps of the flow chart are carried out by the connection manager 510 being implemented in the apparatus 10. At step 512 a network connection is needed by a user device. In step 514 it is checked whether the home network connection is available. If not it is checked whether the car network is available in step 516. If the car network is also not available the method ends in block 518, indicating that no network is available. If the car network is available in 516, the car is used as network in step 520. If the home network is available in 514 is still checked in 522 whether the car network is also available. If the car network is not available, the home network is used as connection 524. If both networks are available a connection is selected according to a load balancing or routing policy.

For example a service provider could make configurations for the connection manager available to its customers based on network setting/configurations of the customer. User data could be tagged depending on important KPIs for a respective data package and the connection manager would choose the connection setting best for the respective data package.

Embodiments may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computerexecutable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons.

## Claims

1. An apparatus (10) for managing a connection between one or more user devices (300) and the internet, the apparatus (10) comprising
one or more interfaces (12) to connect to a home network (400) and to connect to a vehicle (200); and
a control module (14) being configured to
control the one or more interfaces (12),
access the internet via the home network (400) and via the vehicle (200),
control internet traffic between the one or more user devices (300) and the internet, and route the traffic of the one or more user devices (300) to the internet,
**characterized in that**
the one or more interfaces (22) are configured to couple to the home network (400) using a wired connection.

2. The apparatus (10) of claim 1, wherein the control module (14) is configured to balance a load between the traffic routed via the home network (400) and traffic routed via the vehicle (200).

3. The apparatus (10) of one of the claim 1 or 2, wherein the control module (14) is configured to provide enhanced quality of service to the user devices using additional, parallel or alternative traffic routing via the home network (400) and via the vehicle (200).

4. The apparatus (10) of one of the claims 1 to 3, wherein the control module (14) is configured to provide enhanced data rate, communication reliability, and/or lower latency using traffic routing via the home network (400) and via the vehicle (200).

5. An apparatus (20) for a vehicle (200), the apparatus (20) being configured to provide additional internet access for a home network (400), the apparatus (20) comprising one or more interfaces (22) to connect to the home network (400) and to connect to the internet; and
a control module (24) being configured to control the one or more interfaces (22) and to provide additional internet access for the home network (400) via the vehicle (200),
**characterized in that**
the one or more interfaces (22) are configured to couple to the home network (400) using a wired connection.

6. The apparatus (20) of claim 5, wherein the one or more interfaces (22) comprise a cellular modem to couple to the internet and wherein the control module (24) is configured to provide the additional internet access via a cellular communication network.

7. The apparatus (20) of one of the claims 5 or 6, wherein the one or more interfaces (22) comprise a modem for inter-vehicular communication and wherein the control module (24) is configured to provide the additional internet access via inter-vehicular communication.

8. The apparatus (20) of one of the claims 5 to 7, further comprising the apparatus (10) of one of the claims 1 to 4.

9. The apparatus (20) of claim 1, wherein the one or more interfaces (22) are configured to charge the vehicle (200) using the wired connection.

10. A controller for a home network (400) or for a vehicle (200) comprising the apparatus (10; 20) of one of the claims 1 to 9.

11. A method (30) for managing a connection between one or more user devices (300) and the internet, the method (30) comprising
accessing (32) the internet via a home network (400) and via a vehicle (200);
controlling (34) traffic load between the one or more user devices (300) and the internet, and routing (36) the traffic of the one or more user devices (300) to the internet,
**characterized in that**
the step of accessing (32) the internet is realized with one or more interfaces (22) to connect to the home network (400) and to connect to the vehicle (200), wherein the one or more interfaces (22) are configured to couple to the home network (400) using a wired connection.

12. A method (40) for a vehicle (200) and for providing additional internet access for a home network (400), the method (40) comprising
connecting (42) to the home network (400) and to the internet; and
providing (44) additional internet access for the home network (400) via the vehicle (200), **characterized in that**
the step of providing (44) additional internet access is realized with one or more interfaces (22) to connect to the home network (400) and to connect to the vehicle (200), wherein the one or more interfaces (22) are configured to couple to the home network (400) using a wired connection.

13. A computer program having a program code for performing at least one of the methods (30; 40) of claims 11 or 12, when the computer program is executed on a computer, a processor, or a programmable hardware component.

## Patentansprüche

1. Vorrichtung (10) zur Verwaltung einer Verbindung zwischen einem oder mehreren Benutzervorrichtungen (300) und dem Internet, wobei die Vorrichtung (10) Folgendes umfasst eine oder mehrere Schnittstellen (12) zur Verbindung mit einem Heimnetzwerk (400) und zur Verbindung mit einem Fahrzeug (200); und
ein Steuermodul (14), das so konfiguriert ist, dass es
die eine oder mehreren Schnittstellen (12) steuert,
über das Heimnetzwerk (400) und über das Fahrzeug (200) auf das Internet zugreift,
den Internetverkehr zwischen der einen oder den mehreren Benutzervorrichtungen (300) und dem Internet steuert und
den Datenverkehr der einen oder der mehreren Benutzervorrichtungen (300) zum Internet weiterleitet,
**dadurch gekennzeichnet, dass**
die eine oder die mehreren Schnittstellen (22) so konfiguriert sind, dass sie über eine kabelgebundene Verbindung mit dem Heimnetzwerk (400) gekoppelt werden.

2. Vorrichtung (10) nach Anspruch 1, wobei das Steuermodul (14) so konfiguriert ist, dass es eine Last zwischen dem über das Heimnetzwerk (400) geleiteten Datenverkehr und dem über das Fahrzeug (200) geleiteten Datenverkehr ausgleicht.

3. Vorrichtung (10) nach Anspruch 1 oder 2, wobei das Steuermodul (14) so konfiguriert ist, dass es den Benutzervorrichtungen eine verbesserte Dienstqualität bereitstellt, indem es eine zusätzliche, parallele oder alternative Datenverkehrsweiterleitung über das Heimnetzwerk (400) und über das Fahrzeug (200) nutzt.

4. Vorrichtung (10) nach einem der Ansprüche 1 bis 3, wobei das Steuermodul (14) so konfiguriert ist, dass es eine verbesserte Datenrate, Kommunikationszuverlässigkeit und/oder geringere Latenz unter Verwendung der Datenverkehrsweiterleitung über das Heimnetzwerk (400) und über das Fahrzeug (200) bereitstellt.

5. Vorrichtung (20) für ein Fahrzeug (200), wobei die Vorrichtung (20) so konfiguriert ist, dass sie einen zusätzlichen Internetzugang für ein Heimnetzwerk (400) bereitstellt, wobei die Vorrichtung (20) eine oder mehrere Schnittstellen (22) zum Anschluss an das Heimnetzwerk (400) und zum Anschluss an das Internet umfasst;
und
ein Steuermodul (24), das so konfiguriert ist, dass es die eine oder mehrere Schnittstellen (22) steuert und zusätzlichen Internetzugang für das Heimnetzwerk (400) über das Fahrzeug (200) bereitstellt,
**dadurch gekennzeichnet, dass**
die eine oder mehreren Schnittstellen (22) so konfiguriert sind, dass sie über eine kabelgebundene Verbindung mit dem Heimnetzwerk (400) gekoppelt werden.

6. Vorrichtung (20) nach Anspruch 5, wobei die eine oder mehreren Schnittstellen (22) ein Mobilfunkmodem zur Verbindung mit dem Internet umfassen und wobei das Steuermodul (24) so konfiguriert ist, dass es den zusätzlichen Internetzugang über ein Mobilfunknetz bereitstellt.

7. Vorrichtung (20) nach Anspruch 5 oder 6, wobei die eine oder mehreren Schnittstellen (22) ein Modem für die Fahrzeug-zu-Fahrzeug-Kommunikation umfassen und wobei das Steuermodul (24) so konfiguriert ist, dass es den zusätzlichen Internetzugang über die Fahrzeug-zu-Fahrzeug-Kommunikation bereitstellt.

8. Vorrichtung (20) nach einem der Ansprüche 5 bis 7, ferner umfassend die Vorrichtung (10) nach einem der Ansprüche 1 bis 4.

9. Vorrichtung (20) nach Anspruch 1, wobei die eine oder mehreren Schnittstellen (22) so konfiguriert sind, dass das Fahrzeug (200) über die kabelgebundene Verbindung aufgeladen wird.

10. Steuerung für ein Heimnetzwerk (400) oder für ein Fahrzeug (200), die die Vorrichtung (10; 20) nach einem der Ansprüche 1 bis 9 umfasst.

11. Verfahren (30)zum Verwalten einer Verbindung zwischen einer oder mehreren Vorrichtungen (300) und dem Internet, wobei das Verfahren (30) Folgendes umfasst
Zugreifen (32) auf das Internet über ein Heimnetzwerk (400) und über ein Fahrzeug (200); Steuern (34) der Datenverkehrslast zwischen der einen oder den mehreren Vorrichtungen (300) und dem Internet sowie Weiterleiten (36) des Datenverkehrs der einen oder mehreren Vorrichtungen (300) ins Internet,
**dadurch gekennzeichnet, dass**
der Schritt des Zugreifens (32) auf das Internet mit einer oder mehreren Schnittstellen (22) realisiert wird, um eine Verbindung zum Heimnetzwerk (400) und zum Fahrzeug (200) herzustellen, wobei die eine oder mehreren Schnittstellen (22) so konfiguriert sind, dass sie über eine kabelgebundene Verbindung mit dem Heimnetzwerk (400) gekoppelt werden.

12. Verfahren (40) für ein Fahrzeug (200) und zur Bereitstellung eines zusätzlichen Internetzugangs für ein Heimnetzwerk (400), wobei das Verfahren (40) Folgendes umfasst Verbinden (42) mit dem Heimnetzwerk (400) und mit dem Internet; und
Bereitstellen (44) eines zusätzlichen Internetzugangs für das Heimnetzwerk (400) über das Fahrzeug (200),
**dadurch gekennzeichnet, dass**
der Schritt des Bereitstellens (44) eines zusätzlichen Internetzugangs mit einer oder mehreren Schnittstellen (22) zum Verbinden mit dem Heimnetzwerk (400) und zum Verbinden mit dem Fahrzeug (200) realisiert wird, wobei die eine oder mehreren Schnittstellen (22) so konfiguriert sind, dass sie unter Verwendung einer kabelgebundenen Verbindung mit dem Heimnetzwerk (400) gekoppelt werden.

13. Computerprogramm mit einem Programmcode zur Ausführung mindestens eines der Verfahren (30; 40) nach Anspruch 11 oder 12, wenn das Computerprogramm auf einem Computer, einem Prozessor oder einer programmierbaren Hardwarekomponente ausgeführt wird.

## Revendications

1. Appareil (10) pour gérer une connexion entre un ou plusieurs dispositifs utilisateurs (300) et Internet, l'appareil (10) comprenant
une ou plusieurs interfaces (12) pour se connecter à un réseau domestique (400) et pour se connecter à un véhicule (200) ; et
un module de commande (14) configuré pour
commander les une ou plusieurs interfaces (12),
accéder à Internet via le réseau domestique (400) et via le véhicule (200),
commander le trafic Internet entre les un ou plusieurs dispositifs utilisateurs (300) et Internet, et
acheminer le trafic des un ou plusieurs dispositifs utilisateurs (300) vers Internet, **caractérisé en ce que**
les une ou plusieurs interfaces (22) sont configurées pour se coupler au réseau domestique (400) à l'aide d'une connexion filaire.

2. Appareil (10) selon la revendication 1, dans lequel le module de commande (14) est configuré pour équilibrer une charge entre le trafic acheminé via le réseau domestique (400) et le trafic acheminé via le véhicule (200).

3. Appareil (10) selon l'une quelconque des revendications 1 ou 2, dans lequel le module de commande (14) est configuré pour fournir une qualité de service améliorée aux dispositifs utilisateurs à l'aide d'un acheminement supplémentaire, parallèle ou alternatif du trafic via le réseau domestique (400) et via le véhicule (200).

4. Appareil (10) selon l'une quelconque des revendications 1 à 3, dans lequel le module de commande (14) est configuré pour fournir un débit de données amélioré, une fiabilité de communication améliorée et/ou une latence réduite à l'aide d'un acheminement du trafic via le réseau domestique (400) et via le véhicule (200).

5. Appareil (20) pour un véhicule (200), l'appareil (20) étant configuré pour fournir un accès Internet supplémentaire à un réseau domestique (400), l'appareil (20) comprenant
une ou plusieurs interfaces (22) pour se connecter au réseau domestique (400) et pour se connecter à Internet ; et
un module de commande (24) configuré pour commander les une ou plusieurs interfaces (22) et pour fournir un accès Internet supplémentaire au réseau domestique (400) via le véhicule (200),
**caractérisé en ce que**
les une ou plusieurs interfaces (22) sont configurées pour se coupler au réseau domestique (400) à l'aide d'une connexion filaire.

6. Appareil (20) selon la revendication 5, dans lequel les une ou plusieurs interfaces (22) comprennent un modem cellulaire pour se coupler à Internet et dans lequel le module de commande (24) est configuré pour fournir l'accès Internet supplémentaire via un réseau de communication cellulaire.

7. Appareil (20) selon l'une quelconque des revendications 5 ou 6, dans lequel les une ou plusieurs interfaces (22) comprennent un modem pour une communication inter-véhicules et dans lequel le module de commande (24) est configuré pour fournir l'accès Internet supplémentaire via une communication inter-véhicules.

8. Appareil (20) selon l'une quelconque des revendications 5 à 7, comprenant en outre l'appareil (10) selon l'une quelconque des revendications 1 à 4.

9. Appareil (20) selon la revendication 1, dans lequel les une ou plusieurs interfaces (22) sont configurées pour charger le véhicule (200) à l'aide de la connexion filaire.

10. Dispositif de commande pour un réseau domestique (400) ou pour un véhicule (200), comprenant l'appareil (10 ; 20) selon l'une quelconque des revendications 1 à 9.

11. Procédé (30) de gestion d'une connexion entre un ou plusieurs dispositifs utilisateurs (300) et Internet, le procédé (30) comprenant
l'accès (32) à Internet via un réseau domestique (400) et via un véhicule (200) ;
la commande (34) d'une charge de trafic entre les un ou plusieurs dispositifs utilisateurs (300) et Internet, et
l'acheminement (36) du trafic des un ou plusieurs dispositifs utilisateurs (300) vers Internet, **caractérisé en ce que**
l'étape d'accès (32) à Internet est réalisée au moyen d'une ou plusieurs interfaces (22) pour se connecter au réseau domestique (400) et pour se connecter au véhicule (200), les une ou plusieurs interfaces (22) étant configurées pour se coupler au réseau domestique (400) à l'aide d'une connexion filaire.

12. Procédé (40) pour un véhicule (200) et pour fournir un accès Internet supplémentaire à un réseau domestique (400), le procédé (40) comprenant
la connexion (42) au réseau domestique (400) et à Internet ; et
la fourniture (44) d'un accès Internet supplémentaire au réseau domestique (400) via le véhicule (200),
**caractérisé en ce que**
l'étape de fourniture (44) de l'accès Internet supplémentaire est réalisée au moyen d'une ou plusieurs interfaces (22) pour se connecter au réseau domestique (400) et pour se connecter au véhicule (200), les une ou plusieurs interfaces (22) étant configurées pour se coupler au réseau domestique (400) à l'aide d'une connexion filaire.

13. Programme informatique comportant un code de programme pour exécuter au moins l'un des procédés (30 ; 40) selon les revendications 11 ou 12, lorsque le programme informatique est exécuté sur un ordinateur, un processeur ou un composant matériel programmable.
